# EUROPÄISCHE PATENTANMELDUNG

(11) **EP 4 302 856 A1**
(43) Veröffentlichungstag der Anmeldung: **10.01.2024**
(21) Anmeldenummer: 23180804.9
(22) Anmeldetag: 22.06.2023
(51) Int. Cl.: B01D 29/15

(54) **FLÜSSIGKEITSFILTER, FILTERELEMENT UND VERWENDUNG EINES FILTERELEMENTS IN EINEM FLÜSSIGKEITSFILTER**

(30) Priorität: 08.07.2022 DE 102022117115
(71) Anmelder: MANN+HUMMEL GmbH, 71636 Ludwigsburg (DE)
(72) Erfinder: JOKSCHAS, Günter, 71636 Ludwigsburg (DE); FAISST, Marco, 71636 Ludwigsburg (DE); THALMANN, Christian, 71636 Ludwigsburg (DE); WEINDORF, Martin, 71636 Ludwigsburg (DE); GLÜCK, Oliver, 71636 Ludwigsburg (DE); SALOM, Rafael, 71636 Ludwigsburg (DE); TRAUTMANN, Pius, 71636 Ludwigsburg (DE); KAGITHA, Lavanya, 71636 Ludwigsburg (DE); TALMON-GROS, Dietmar, 71636 Ludwigsburg (DE); RÜGNER, Matthias, 71636 Ludwigsburg (DE); SPEIDEL, Gerrit-Tobias, 71636 Ludwigsburg (DE); ROLLE, Arndt-Udo, 71636 Ludwigsburg (DE); MÄRTZ, Mike, 71636 Ludwigsburg (DE); JAINEK, Herbert, 71636 Ludwigsburg (DE); BAUCH, Maximilian, 71636 Ludwigsburg (DE)
(74) Vertreter: Mann + Hummel Intellectual Property

(57) **Zusammenfassung**

Die Erfindung betrifft einen Flüssigkeitsfilter (10) aufweisend
- ein Filtergehäuse (12) mit einem Filterkopf (14) und einem Gehäusetopf (16),
- ein Filterelement (22) mit einem Filtermedium (24), das eine Längsachse (26) ringförmig umgibt,
wobei das Filterelement (22) einen Fortsatz (44) mit einer Rastnut (46) aufweist, wobei an dem Gehäusetopf (16) eine Rastvorrichtung (42) mit wenigstens einem radial zu der Längsachse (26) beweglichen Rastmittel (48) vorgesehen ist, wobei das Rastmittel (48) in einem Rastzustand der Rastvorrichtung (42) in die Rastnut (46) eingreift und in einem Freigabezustand der Rastvorrichtung (42) außer Eingriff mit der Rastnut (46) bringbar ist.

## Beschreibung

### Technisches Gebiet

Die Erfindung betrifft einen Flüssigkeitsfilter aufweisend ein Filtergehäuse mit einem Filterkopf und einem Gehäusetopf und ein Filterelement mit einem Filtermedium, das eine Längsachse ringförmig umgibt.

### Stand der Technik

Solche Flüssigkeitsfilter sind aus dem Stand der Technik hinlänglich bekannt. Derartige Flüssigkeitsfilter werden beispielsweise zum Filtern von Kraftstoff oder Öl eingesetzt.

Für einen Wechsel des Filterelements wird der Gehäusetopf von dem Filterkopf gelöst. Um Verschmutzungen und Verunreinigungen der Umwelt zu vermeiden, ist es dabei zweckmäßig, vor dem Öffnen des Filtergehäuses bzw. vor dem Entnehmen des Filterelements aus dem Gehäusetopf die Flüssigkeit aus dem Gehäusetopf zu entfernen.

Ein Flüssigkeitsfilter der eingangs genannten Art ist beispielsweise aus DE 20 2008 013 578 U1 bekannt. Bei diesem Flüssigkeitsfilter ist ein Abflussstutzen mit einem Abflusskanal vorgesehen. Der Abflussstutzen kann zwischen einer geschlossenen Position und einer offenen Position bewegt werden. Der Abflussstutzen gleitet dabei in einer Bohrung im Gehäusetopf. Der Abflussstutzen wirkt mit dem Filterelement zusammen. Für einen lösbaren Eingriff kann der Abflussstutzen mit einem Außengewinde in ein Innengewinde einer Endplatte des Filterelements eingeschraubt werden.

Ein ähnlicher Flüssigkeitsfilter ist aus US 2017/0095759 A1 bekannt. Ein Ablassventil dieses Flüssigkeitsfilters umfasst einen Ventilkörper mit einem axialen Durchlass und einen Ventilschaft, der an einer Bodenkappe des Filterelements ausgebildet ist. Der Ventilkörper ist in einer Bohrung des Gehäusetopfs beweglich geführt. Der Ventilschaft ist mit einem Außengewinde für einen Eingriff in ein Innengewinde des Ventilkörpers versehen.

In einer Nut des Ventilschafts ist ein O-Ring zur Abdichtung des Ventilschafts gegenüber dem Ventilkörper angeordnet.

Bei den beiden vorgenannten Flüssigkeitsfiltern muss für einen Austausch des Filterelements die jeweilige Gewindeverbindung zwischen dem Filterelement und dem Abflussstutzen bzw. Ventilkörper gelöst werden. Dies ist mit einem gewissen Aufwand verbunden.

Es ist eine Aufgabe der Erfindung, den Wechsel eines Filterelements zuverlässig, einfach und besonders schnell durchführbar zu gestalten.

### Offenbarung der Erfindung

Diese Aufgabe wird durch einen Flüssigkeitsfilter mit den in Anspruch 1 angegebenen Merkmalen, eine Verwendung eines Filterelements gemäß Anspruch 13 und ein Filterelement gemäß Anspruch 14 gelöst. Bevorzugte Ausführungsformen sind in den jeweiligen Unteransprüchen und der Beschreibung angegeben.

Erfindungsgemäß ist ein Flüssigkeitsfilter vorgesehen. Der Flüssigkeitsfilter weist ein Filtergehäuse mit einem Filterkopf und einem Gehäusetopf auf. Der Gehäusetopf ist grundsätzlich lösbar an dem Filterkopf befestigbar, beispielsweise an den Filterkopf anschraubbar. Der Flüssigkeitsfilter weist ferner ein Filterelement mit einem Filtermedium auf. Das Filtermedium umgibt eine Längsachse ringförmig. Das Filtermedium kann aus gefaltetem Papier bestehen. Das Filterelement kann von radial außen nach radial innen durchströmbar sein. Ein von dem Filtermedium eingeschlossener Innenraum bildet in diesem Fall eine Reinseite. Der Flüssigkeitsfilter kann zum Filtern von Kraftstoff oder Öl eingesetzt werden. Der Flüssigkeitsfilter kann an einem Nutzfahrzeug, beispielsweise einem Traktor oder Bagger, verwendet werden. Der Flüssigkeitsfilter kann beispielsweise auch zum Filtern von Getriebeöl eines Elektromotors eines elektrisch angetriebenen Kraftfahrzeugs verwendet werden.

Erfindungsgemäß weist das Filterelement einen Fortsatz mit einer Rastnut auf. Der Fortsatz erstreckt sich in der Regel parallel zur Längsachse, typischerweise ist der Fortsatz konzentrisch zur Längsachse angeordnet. Der Fortsatz steht in der Regel über eine Stirnseite des Filtermediums bzw. eine Endscheibe an der Stirnseite vor. Der Fortsatz ist typischerweise unbeweglich an das Filtermedium gekoppelt.

Weiter erfindungsgemäß ist an dem Gehäusetopf eine Rastvorrichtung mit wenigstens einem radial zu der Längsachse beweglichen Rastmittel vorgesehen. Die Rastvorrichtung ist typischerweise an einem Topfboden des Gehäusetopfs angeordnet. In einem Rastzustand der Rastvorrichtung greift das wenigstens eine Rastmittel in die Rastnut ein; in einem Freigabezustand der Rastvorrichtung ist das wenigstens eine Rastmittel außer Eingriff mit der Rastnut bringbar. Eine Bewegung des wenigstens einen Rastmittels weist dabei eine Bewegungskomponente radial zur Längsachse auf. Es kann mehr als ein Rastmittel vorgesehen sein, z. B. können wenigstens drei, insbesondere genau drei, Rastmittel vorgesehen sein.

Im Rastzustand ist das Filterelement durch den Eingriff des wenigstens einen Rastmittels in die Rastnut sicher am Gehäusetopf gehalten. Dadurch kann sichergestellt werden, dass beim Abnehmen des Gehäusetopfs von dem Filterkopf das Filterelement im Gehäusetopf verbleibt und auch bei der weiteren Handhabung nicht unbeabsichtigt herausfällt. Um das Filterelement aus dem Gehäusetopf zu entnehmen, kann die Verrastung schnell und einfach gelöst werden. Ein neues Filterelement kann sodann in den Gehäusetopf eingesetzt und mit diesem verrastet werden. Ein Verrutschen des Filterelements im Gehäusetopf bei der Montage am Filterkopf kann dadurch vermieden werden.

Vorzugsweise weist die Rastnut einen abgerundeten, insbesondere kreissegmentförmigen Querschnitt auf. Eine derartige Form der Rastnut kann einfach gefertigt werden und erlaubt einen sicheren Eingriff des Rastmittels. Durch die gerundete Form wird ein vorteilhafter Kraftfluss mit geringen Spannungsspitzen im Fortsatz erhalten.

Der Fortsatz und ein Stützrohr und/oder eine Endscheibe des Filterelements können miteinander einstückig sein. Dies vereinfacht die Herstellung und gewährleistet eine stabile Verbindung des Fortsatzes mit dem Filtermedium.

Das wenigstens eine Rastmittel kann eine Kugel sein. Kugeln sind kostengünstig erhältlich. Zudem kann bei der Verwendung von Kugeln als Rastmittel vermieden werden, dass sich diese beim Einrichten bzw. Lösen der Verrastung ungewollt verklemmen.

Besonders bevorzugt ist das wenigstens eine Rastmittel in einem, insbesondere entlang der Längsachse, zwischen einer Raststellung und einer Freigabestellung beweglichen Halter geführt. Der Halter ermöglicht einerseits eine Führung des wenigstens einen Rastmittels. Andererseits kann der Halter das Lösen des wenigstens einen Rastmittels aus dem Eingriff in die Rastnut vereinfachen, insbesondere wenn mehrere Rastmittel vorgesehen sind. Für den Rastzustand der Rastvorrichtung wird der Halter in die Raststellung verbracht; für den Freigabezustand der Rastvorrichtung wird der Halter in die Freigabestellung verbracht.

Vorzugsweise ist der Halter in die Raststellung vorgespannt. Insbesondere kann der Halter von einem Topfboden des Gehäusetopfs weg bzw. zu dem Filterelement hin. vorgespannt sein. Durch die Vorspannung kann erreicht werden, dass beim Einsetzen eines Filterelements ohne weiteres Zutun eine Verrastung stattfindet. Ein Federelement kann sich einerseits an dem Halter andererseits an dem Gehäusetopf, insbesondere an dessen Topfboden, abstützen.

Der Halter kann in einem Aufnahmeteil aufgenommen sein. Das Aufnahmeteil kann einen Anschlag für den Halter in der Raststellung bilden. Vorzugsweise ist das Aufnahmeteil mit dem Gehäusetopf verrastet. Dies vereinfacht die Montage der Rastvorrichtung.

Besonders bevorzugt stützt sich das wenigstens eine Rastmittel im Rastzustand der Rastvorrichtung an dem Aufnahmeteil ab. Das Aufnahmeteil kann somit dafür sorgen, dass das Rastmittel nach radial innen eingerückt wird, um in die Rastnut einzugreifen. Insbesondere kann das Aufnahmeteil konisch sein. Wenn der Halter mit dem wenigstens einen Rastmittel entlang der Längsachse in die Raststellung überführt wird, wird das wenigstens eine Rastmittel zunehmend nach radial innen geschoben. Umgekehrt kann das Rastmittel durch Einführen des Fortsatzes in die Rastvorrichtung unter axialer Bewegung des Halters nach radial außen gedrückt werden. Das Einsetzen eines neuen Filterelements in den Gehäusetopf wird dadurch besonders komfortabel gestaltet, da eine zusätzliche Betätigung der Rastvorrichtung nicht erforderlich ist. Es genügt vielmehr, das Filterelement in den Gehäusetopf zu drücken.

Die Rastvorrichtung kann ein Griffstück zum Bewegen des Halters aufweisen, wobei das Griffstück in einem begrenzten Umfang relativ zu dem Halter beweglich ist, insbesondere entlang der Längsachse. Das Lösen der Verrastung wird dadurch vereinfacht. Für den Gebrauch des Flüssigkeitsfilters kann das Griffstück in eine platzsparende Gebrauchsposition verbracht werden. Für einen Austausch des Filterelements kann das Griffstück in eine Handhabungsposition verbracht werden, in welcher es gut zu ergreifen ist. Das Bedienen der Rastvorrichtung wird dadurch vereinfacht. Die Handhabungsposition ist typischerweise durch einen Anschlag zwischen dem Halter und dem Griffstück definiert.

Vorzugsweise ist das Griffstück zu einer Außenseite des Gehäusetopfs hin vorgespannt. Dadurch kann erreicht werden, dass das Griffstück selbsttätig in die Handhabungsposition übergeht. Die Bedienung der Rastvorrichtung wird dadurch besonders komfortabel gestaltet.

Die Rastvorrichtung kann an einer Ablassöffnung im Gehäusetopf angeordnet sein. Vorzugsweise weist das Filtergehäuse eine Verschlussschraube für die Ablassöffnung auf. Für einen Betrieb des Flüssigkeitsfilters wird die Ablassöffnung mit der Verschlussschraube verschlossen. Vor einem Austausch des Filterelements wird die Ablassöffnung durch Entfernen der Verschlussschraube geöffnet, sodass die Flüssigkeit aus dem Filtertopf ablaufen kann.

Besonders bevorzugt stützt sich das Griffstück für den Halter an der Verschlussschraube ab, wenn die Verschlussschraube - in einem montierten Zustand - die Ablassöffnung verschließt. Beim Einschrauben der Verschlussschraube wird das Griffstück somit in die Gebrauchsposition verbracht. Beim Entfernen der Verschlussschraube kann das Griffstück, insbesondere wenn es entsprechend vorgespannt ist oder aufgrund der Schwerkraft, selbsttätig in die Handhabungsposition übergehen.

Der Fortsatz kann eine durchgehende Längsausnehmung aufweisen. Die durchgehende Längsausnehmung verbindet einen Innenraum des Filterelements fluidisch mit einem axialen Ende des Fortsatzes. Flüssigkeit aus dem Innenraum kann somit durch die Längsausnehmung abgeführt werden. Im montierten Zustand verschließt die Verschlussschraube sowohl die Ablassöffnung als auch die Längsausnehmung. Eine Strömung der zu filternden Flüssigkeit an dem Filtermedium vorbei kann dadurch verhindert werden. Beim Entfernen der Verschlussschraube wird hingegen eine Entleerung sowohl des Bereichs außerhalb des Filterelements als auch des Innenraums des Filterelements ermöglicht.

Alternativ kann der Fortsatz geschlossen ausgebildet sein. Insbesondere kann der Innenraum des Filterelements bei dem Fortsatz fluiddicht geschlossen sein.

Der Fortsatz kann einen Ansatz und ein relativ zu dem Ansatz bewegliches Ausgleichselement aufweisen. Das Ausgleichselement ist typischerweise entlang der Längsachse relativ zum Ansatz beweglich. Im montierten Zustand ist die Verschlussschraube mit dem Ausgleichselement gekoppelt, insbesondere über ein Dichtelement. Das Ausgleichselement kann Bewegungen zwischen dem Filtertopf, insbesondere dem Topfboden, und dem Filterelement kompensieren. Solche Bewegungen können beispielsweise bei Pulsationen des Flüssigkeitsdrucks im Flüssigkeitsfilter auftreten. Bei einer Druckerhöhung entfernt sich die Verschlussschraube am Topfboden aufgrund der Elastizität des Gehäusetopfs vom Filterkopf. Das Filterelement ist einerseits in einem Dichtsitz am Filterkopf gehalten; andererseits ist das Filterelement im Betrieb typischerweise dichtend mit der Verschlussschraube verbunden. Bewegungen an den Dichtstellen können vermieden werden, indem eine Bewegungsmöglichkeit zwischen dem Ansatz und dem Ausgleichselement des Fortsatzes eingerichtet ist. Die Rastnut ist typischerweise am Ansatz des Fortsatzes ausgebildet; alternativ kann die Rastnut am Ausgleichselement ausgebildet sein. Der Ansatz ist grundsätzlich starr mit dem Filtermedium verbunden, beispielsweise über ein Stützrohr oder eine Endscheibe. Der Ansatz und das Stützrohr und/oder die Endscheibe können miteinander einstückig sein.

In den Rahmen der vorliegenden Erfindung fällt auch eine Verwendung eines Filterelements mit einem Filtermedium, das eine Längsachse ringförmig umgibt, wobei das Filterelement einen Fortsatz mit einer Rastnut aufweist, in einem oben beschriebenen, erfindungsgemäßen Flüssigkeitsfilter. Das Filterelement kann weitere oben beschriebene Merkmale aufweisen. Die entsprechenden Vorteile können bei der erfindungsgemäßen Verwendung des Filterelements genutzt werden.

Ebenfalls in den Rahmen der vorliegenden Erfindung fällt ein Filterelement für einen oben beschriebenen, erfindungsgemäßen Flüssigkeitsfilter. Das Filterelement weist ein Filtermedium, das eine Längsachse ringförmig umgibt, und einen Fortsatz mit einer Rastnut auf. Die Rastnut weist einen abgerundeten, insbesondere kreissegmentförmigen, Querschnitt auf. Vorzugsweise sind der Fortsatz und ein Stützrohr und/oder eine Endscheibe des Filterelements miteinander einstückig. Das Filterelement kann weitere oben beschriebene Merkmale aufweisen. Bei der Verwendung des erfindungsgemäßen Filterelements in einer Filtereinrichtung können die entsprechenden Vorteile genutzt werden.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

In der Zeichnung zeigen:
- Fig. 1: einen erfindungsgemäßen Flüssigkeitsfilter mit einem erfindungsgemäßen Filterelement, das in einem Filtergehäuse aufgenommen ist, in einer schematischen Schnittansicht, wobei das Filterelement an einer Rastvorrichtung an einem Gehäusetopf des Filtergehäuses verrastet ist;
- Fig. 2: eine schematische, vergrößerte Darstellung im Bereich der Rastvorrichtung einer ersten Ausführungsform des erfindungsgemäßen Flüssigkeitsfilters in einem Rastzustand mit eingeschraubter Verschlussschraube;
- Fig. 3: den Flüssigkeitsfilter von Figur 2 bei entfernter Verschlussschraube, wobei ein Griffstück der Rastvorrichtung aus dem Filtertopf vorsteht, in einer schematischen Schnittansicht;
- Fig. 4: den Flüssigkeitsfilter von Figur 2 in einem Freigabezustand mit aus der Rastvorrichtung gelöstem Filterelement, in einer schematischen Schnittansicht;
- Fig. 5: eine schematische, vergrößerte Darstellung im Bereich der Rastvorrichtung einer zweiten Ausführungsform des erfindungsgemäßen Flüssigkeitsfilters in einem Rastzustand mit eingeschraubter Verschlussschraube;
- Fig. 6: eine schematische, vergrößerte Darstellung im Bereich der Rastvorrichtung einer dritten Ausführungsform des erfindungsgemäßen Flüssigkeitsfilters in einem Rastzustand mit eingeschraubter Verschlussschraube.

### Ausführungsformen der Erfindung

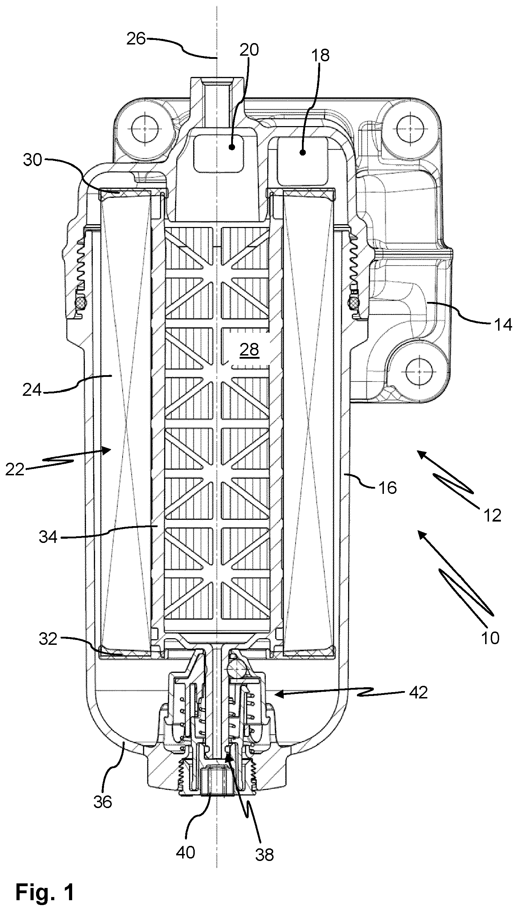

**Figur 1** zeigt einen Flüssigkeitsfilter 10. Der Flüssigkeitsfilter 10 weist ein Filtergehäuse **12** mit einem Filterkopf **14** und einem Gehäusetopf **16,** der an den Filterkopf 14 angeschraubt ist, auf. An dem Filterkopf 14 sind ein Einlass **18** für zu filternde Flüssigkeit und ein Auslass **20** für gefilterte Flüssigkeit ausgebildet.

Ein Filterelement **22** des Flüssigkeitsfilters 10 ist in dem Filtergehäuse 12 aufgenommen. Das Filterelement 22 weist ein Filtermedium **24** auf, das eine Längsachse **26** ringförmig umgibt und einen Innenraum **28** einschließt. Das Filtermedium 24 kann sternförmig gefaltetes Papier sein. Das Filtermedium 24 ist hier von radial außen nach radial innen durchströmbar. Das Filtermedium 24 ist zwischen einer dem Filterkopf 14 zugeordneten Endscheibe **30** und einer topfseitigen Endscheibe **32** eingefasst. Radial innen ist das Filtermedium 24 an einem Stützrohr **34** abgestützt.

In einem Topfboden **36** des Gehäusetopfs 16 ist eine Ablassöffnung **38** ausgebildet. Die Ablassöffnung 38 ist durch Einsetzen einer Verschlussschraube **40** verschließbar (wie dargestellt) bzw. durch Entfernen der Verschlussschraube 40 öffenbar.

Der Gehäusetopf 16 weist eine Rastvorrichtung **42** zum Verrasten des Filterelements 22 mit dem Gehäusetopf 16 auf. Die Rastvorrichtung 42 ist am Topfboden 36 im Bereich der Ablassöffnung 38 vorgesehen. Einzelheiten der Rastvorrichtung 42 und deren Zusammenwirken mit dem Filterelement 22 werden nachfolgend anhand verschiedener beispielhafter Ausführungsformen erläutert.

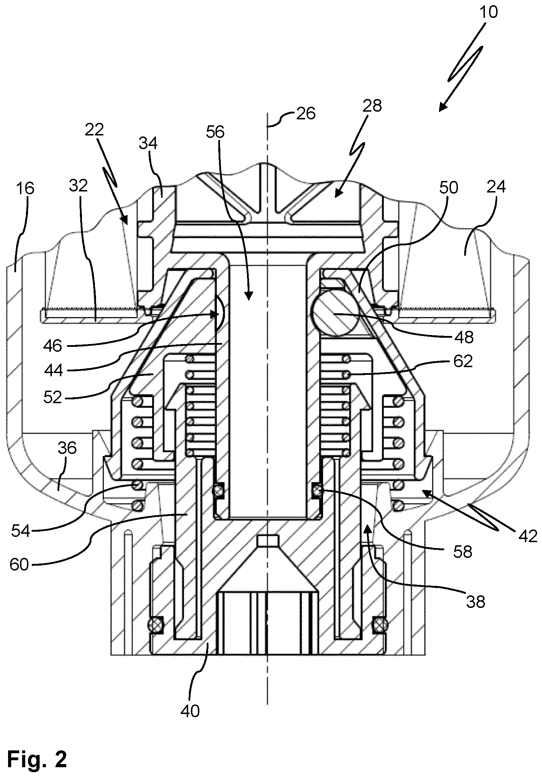

**Figur 2** zeigt einen Ausschnitt im Bereich der Rastvorrichtung 42 einer ersten Ausführungsform des Flüssigkeitsfilters 10. In Figur 2 befindet sich die Rastvorrichtung 42 in einem Rastzustand, in welchem das Filterelement 22 mit dem Gehäusetopf 16 verrastet ist.

Das Filterelement 22 weist einen Fortsatz **44** auf. Der Fortsatz 44 ragt konzentrisch zu der Längsachse 26 von dem Filterelement 22 ab, insbesondere steht der Fortsatz 44 über die topfseitige Endscheibe 32 in axialer Richtung (bezüglich der Längsachse 26) vor. Der Fortsatz 44 ist hier einstückig an das Stützrohr 34 angeformt.

In dem Fortsatz 44 ist eine Rastnut **46** ausgebildet. Vorliegend weist die Rastnut 46 einen abgerundeten Querschnitt auf. Konkret ist die Rastnut 46 durch eine kreissegmentförmige Vertiefung im Fortsatz 44 gebildet.

Im Rastzustand greift wenigstens ein Rastmittel **48** in die Rastnut 46 ein. Die Rastmittel 48 sind hier als Kugeln ausgebildet. Radial außen stützen sich die Rastmittel 48 im Rastzustand an einem konischen Aufnahmeteil **50** der Rastvorrichtung 42 ab. Das Aufnahmeteil 50 ist an dem Gehäusetopf 16 befestigt, beispielsweise mit diesem verrastet. Das Filterelement 22 kann aufgrund der zwischen der Rastnut 46 und dem Aufnahmeteil 50 abgestützten Rastmittel 48 nicht aus dem Gehäusetopf 16 entfernt werden, solange sich die Rastvorrichtung 42 im Rastzustand befindet.

Die Rastmittel 48 sind in einem Halter **52** geführt. Der Halter 52 ist innerhalb des Aufnahmeteils 50 entlang der Längsachse 26 beweglich. Der Halter 52 ist durch ein Federelement **54** in eine Raststellung, hier von dem Topfboden 36 zu dem Filterelement 22 hin, vorgespannt. In der Raststellung liegt der Halter 52 an dem Aufnahmeteil 50 an, welches mit anderen Worten einen Anschlag für den Halter 52 bildet.

Der Fortsatz 44 weist hier eine durchgehende Längsausnehmung **56** auf. Die Längsausnehmung 56 eröffnet den Innenraum 28 in axialer Richtung nach außen.

In Figur 2 ist die Verschlussschraube 40 in die Ablassöffnung 38 eingeschraubt. Die Verschlussschraube 40 verschließt somit die Ablassöffnung 38. Ferner verschließt die Verschlussschraube 40 die Längsausnehmung 56 des Fortsatzes 44. Hierzu kann zwischen dem Fortsatz 44 und der Verschlussschraube 40 ein Dichtelement **58** angeordnet sein.

Bei der in Figur 2 dargestellten Ausführungsform weist die Rastvorrichtung 42 ein Griffstück **60** für den Halter 52 auf. Das Griffstück 60 ist in Längsrichtung verschieblich am Halter 52 geführt. Vorliegend ist das Griffstück 60 durch ein weiteres Federelement **62** vom Halter 52 weg zu einer Außenseite des Gehäusetopfs 16 hin vorgespannt. Bei eingesetzter Verschlussschraube 40 wird das Griffstück 60 somit gegen die Verschlussschraube 40 gedrückt. Die montierte Verschlussschraube 40 hält das Griffstück 60 in der gezeigten Gebrauchsposition für einen Filterbetrieb des Flüssigkeitsfilters 10.

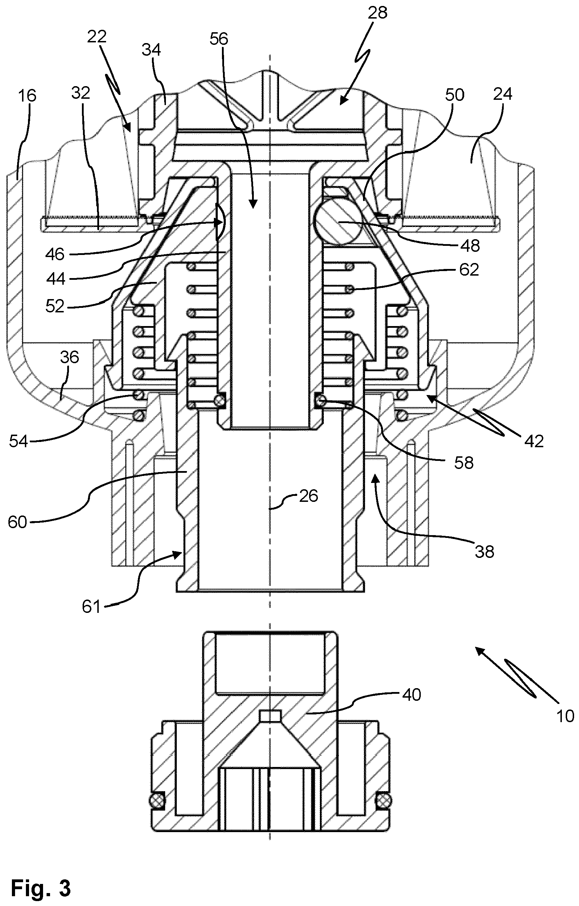

Das Griffstück 60 dient zum Lösen der Verrastung des Filterelements 22 am Gehäusetopf 16. Für einen Austausch des Filterelements 22 wird zunächst die Verschlussschraube 40 entfernt, siehe **Figur 3**. Im Gehäusetopf 16 befindliche Flüssigkeit kann somit durch die Ablassöffnung 38 ablaufen. Insbesondere kann Flüssigkeit aus dem Innenraum 28 des Filterelements 22 durch die Längsausnehmung 56 im Fortsatz 44 und die Ablassöffnung 38 abgeführt werden.

Bei entfernter Verschlussschraube 40 drückt das Federelement 62 das Griffstück 60 von dem Halter 52 weg, sodass das Griffstück 60 in eine Handhabungsposition verbracht wird, in welcher es in axialer Richtung aus dem Gehäusetopf 16 herausragt. Insbesondere können Griffmulden **61** am Griffstück 60 über ein unteres Ende des Gehäusetopfs 16 vorstehen. In der Handhabungsposition kommt das Griffstück 60 am Halter 52 zur Anlage. Zwischen dem Griffstück 60 und dem Halter 52 ist mit anderen Worten ein Anschlag eingerichtet, welcher die Beweglichkeit dieser beiden Bauteile relativ zueinander begrenzt.

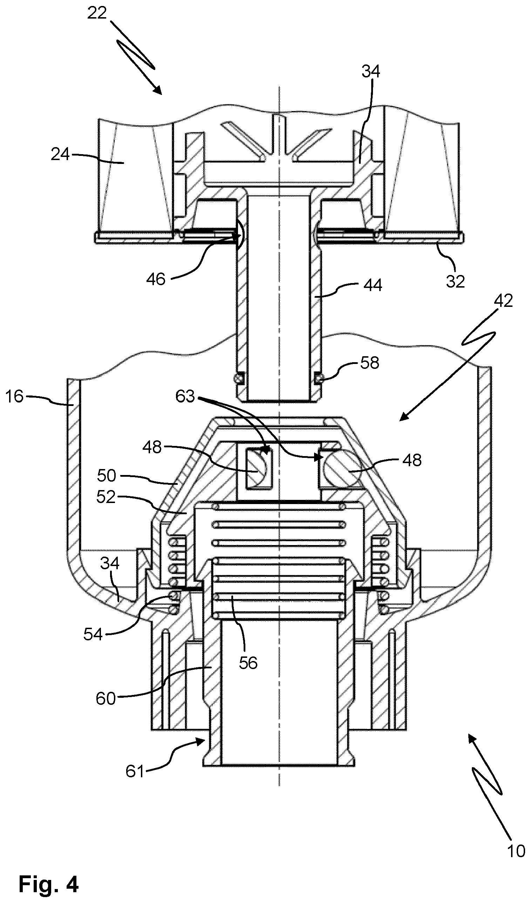

Durch Ziehen am Griffstück 60 kann der Halter 52 in einen **Figur 4** gezeigte Freigabestellung verbracht werden. Durch Bewegen des Halters 52 in die Freigabestellung wird die Rastvorrichtung 42 in einen Freigabezustand überführt. Da der Halter 52 von dem Aufnahmeteil 50 wegbewegt ist, können sich die Rastmittel 48 in radialen Führungsausnehmungen **63** im Halter 52 nach radial außen bewegen. Somit kann der Eingriff der Rastmittel 48 in die Rastnut 46 gelöst werden. Der Fortsatz 44 kann aus der Rastvorrichtung 42 herausgezogen werden; somit kann auch das Filterelement 22 aus dem Gehäusetopf 16 entfernt werden.

Beim Einsetzen eines (neuen) Filterelements 22 drückt das freie Ende des Fortsatzes 44 den Halter 52 über die Rastmittel 48 gegen die Wirkung des Federelements 54 in die Freigabestellung. Die Verschlussschraube 40 kann hierbei bereits wieder montiert sein. Wenn das Filterelement 22 vollständig eingeführt ist, bewegen sich die Rastmittel 48 aufgrund der Federvorspannung in die Rastnut 46 hinein. Das Filterelement 22 wird somit am Gehäusetopf 16 verrastet.

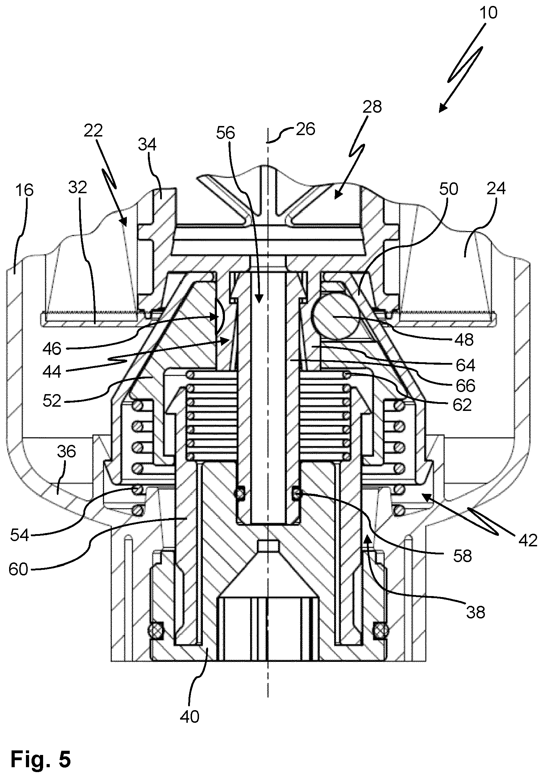

**Figur 5** zeigt einen Ausschnitt im Bereich der Rastvorrichtung 42 einer zweiten Ausführungsform des Flüssigkeitsfilters 10, die in weiten Teilen der ersten Ausführungsform (vergleiche Figuren 2 bis 4) entspricht. Insbesondere entspricht die Rastvorrichtung 42 des Gehäusetopfs 16 der in Figur 5 gezeigten zweiten Ausführungsform in ihrem funktionalen Aufbau der in den Figuren 2 bis 4 gezeigten und oben beschriebenen Rastvorrichtung 42 der ersten Ausführungsform.

Bei der in Figur 5 gezeigten zweiten Ausführungsform weist das Filterelement 22 einen mehrteiligen Fortsatz 44 auf. Ein Ansatz **64** des Fortsatzes 44 ist starr mit dem Filtermedium 24 verbunden. Hier ist der Ansatz 64 einstückig mit dem Stützrohr 34 ausgebildet. Die Rastnut 46 ist in dem Ansatz 64 ausgebildet.

Der Fortsatz 44 umfasst hier ferner ein Ausgleichselement **66,** das in Längsrichtung beweglich an dem Ansatz 64 geführt und an dem Ansatz 64 gehalten ist. Die Längsausnehmung 56 erstreckt sich sowohl durch den Ansatz 64 als auch durch das Ausgleichselement 66.

Im montierten Zustand verschließt die Verschlussschraube 40 sowohl die Ablassöffnung 38 als auch die Längsausnehmung 56. Hierzu greift die Verschlussschraube 40 an dem Ausgleichselement 66 an. Vorliegend ist die Verschlussschraube 40 über das Dichtelement 58 mit dem Ausgleichselement 66 gekoppelt, indem das Dichtelement 58 zwischen der Verschlussschraube 40 und dem Ausgleichselement 66 verpresst ist.

Die Beweglichkeit des Ausgleichselements 66 relativ zum Ansatz 64 ermöglicht Bewegungen der Verschlussschraube 40 relativ zum Filterelement 22, ohne dass hieraus am Dichtelement 58 Relativbewegungen zwischen der Verschlussschraube 40 und dem Fortsatz 44 resultieren.

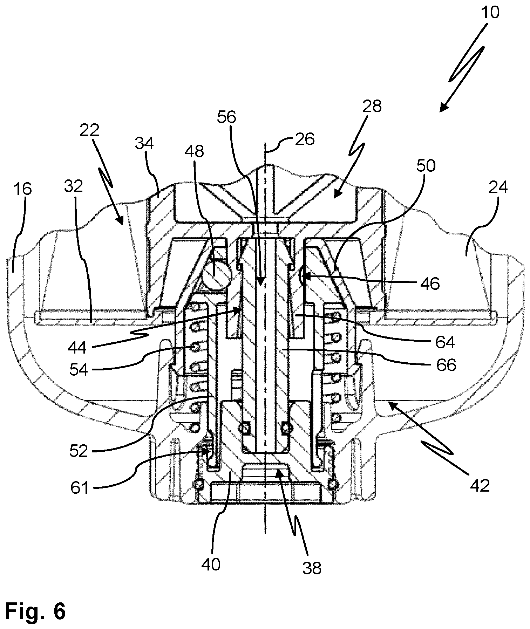

**Figur 6** zeigt einen Ausschnitt im Bereich der Rastvorrichtung 42 einer dritten Ausführungsform des Flüssigkeitsfilters 10, die in weiten Teilen der zweiten Ausführungsform (vergleiche Figur 5) entspricht. Insbesondere entspricht das Filterelement 22 der in Figur 6 gezeigten dritten Ausführungsform in seinem funktionalen Aufbau dem in Figur 5 gezeigten und oben beschriebenen Filterelement 22 der zweiten Ausführungsform.

Bei der in Figur 6 gezeigten dritten Ausführungsform ist kein separates Griffstück für den Halter 52 vorgesehen. Griffmulden 61 sind hier unmittelbar am Halter 52 ausgebildet. Nach Entfernen der Verschlussschraube 40 bleibt verbleibt der Halter 52 aufgrund der Vorspannung des Federelements 54 zunächst in der gezeigten Raststellung. Zum Verbringen des Halters 52 in die nicht näher dargestellte Freigabestellung muss in die Ablassöffnung 38 hineingegriffen werden.

Zusammenfassend betrifft die Erfindung einen Flüssigkeitsfilter, bei welchem ein Filterelement an einem Gehäusetopf verrastbar ist. Das Filterelement weist einen Fortsatz mit einer Rastnut auf. Die Rastnut kann als eine abgerundete, insbesondere kreissegmentförmige, Vertiefung am Fortsatz ausgebildet sein. Am Gehäusetopf ist eine Rastvorrichtung vorgesehen. Der Fortsatz kann zum Verrasten in die Rastvorrichtung eingeführt werden. Ein Rastmittel ist in die Rastnut einrückbar bzw. außer Eingriff mit der Rastnut bringbar. Hierzu kann das Rastmittel insbesondere in radialer Richtung bewegt werden. Die radiale Beweglichkeit des Rastmittels kann durch eine konische Anlagefläche und einen axial beweglichen Halter, welcher das Rastmittel in axialer Richtung mitnimmt, jedoch Radialbewegungen des Rastmittels zulässt, eingerichtet sein.

### Bezugszeichenliste

Flüssigkeitsfilter 10
Filtergehäuse **12**
Filterkopf **14**
Gehäusetopf **16**
Einlass **18**
Auslass **20**
Filterelement **22**
Filtermedium **24**
Längsachse **26**
Innenraum **28**
kopfseitige Endscheibe **30**
topfseitige Endscheibe **32**
Stützrohr **34**
Topfboden **36**
Ablassöffnung **38**
Verschlussschraube **40**
Rastvorrichtung **42**
Fortsatz **44**
Rastnut **46**
Rastmittel **48**
Aufnahmeteil **50**
Halter **52**
Federelement **54**
Längsausnehmung **56**
Dichtelement **58**
Griffstück **60**
Griffmulden **61**
Federelement **62**
Führungsausnehmungen **63**
Ansatz **64**
Ausgleichselement **66**

## Patentansprüche

1. Flüssigkeitsfilter (10) aufweisend
- ein Filtergehäuse (12) mit einem Filterkopf (14) und einem Gehäusetopf (16),
- ein Filterelement (22) mit einem Filtermedium (24), das eine Längsachse (26) ringförmig umgibt,
wobei das Filterelement (22) einen Fortsatz (44) mit einer Rastnut (46) aufweist, wobei an dem Gehäusetopf (16) eine Rastvorrichtung (42) mit wenigstens einem radial zu der Längsachse (26) beweglichen Rastmittel (48) vorgesehen ist, wobei das Rastmittel (48) in einem Rastzustand der Rastvorrichtung (42) in die Rastnut (46) eingreift und in einem Freigabezustand der Rastvorrichtung (42) außer Eingriff mit der Rastnut (46) bringbar ist.

2. Flüssigkeitsfilter (10) nach Anspruch 1, **dadurch gekennzeichnet, dass** die Rastnut (46) einen abgerundeten, insbesondere kreissegmentförmigen, Querschnitt aufweist.

3. Flüssigkeitsfilter (10) nach Anspruch 1 oder 2, **dadurch gekennzeichnet, dass** der Fortsatz (44) und ein Stützrohr (34) und/oder eine Endscheibe (32) des Filterelements (22) miteinander einstückig sind.

4. Flüssigkeitsfilter (10) nach einem der vorhergehenden Ansprüche, **dadurch gekennzeichnet, dass** das wenigstens eine Rastmittel (48) eine Kugel ist.

5. Flüssigkeitsfilter (10) nach einem der vorhergehenden Ansprüche, **dadurch gekennzeichnet, dass** das wenigstens eine Rastmittel (48) in einem zwischen einer Raststellung und einer Freigabestellung beweglichen Halter (52) geführt ist, vorzugsweise wobei der Halter (52) in die Raststellung vorgespannt ist.

6. Flüssigkeitsfilter (10) nach Anspruch 5, **dadurch gekennzeichnet, dass** der Halter (52) in einem Aufnahmeteil (50) aufgenommen ist, vorzugsweise wobei das Aufnahmeteil (50) mit dem Gehäusetopf (16) verrastet ist.

7. Flüssigkeitsfilter (10) nach Anspruch 6, **dadurch gekennzeichnet, dass** sich das wenigstens eine Rastmittel (48) im Rastzustand an dem Aufnahmeteil (50) abstützt.

8. Flüssigkeitsfilter (10) nach einem der Ansprüche 5 bis 7, **dadurch gekennzeichnet, dass** die Rastvorrichtung (42) ein Griffstück (60) zum Bewegen des Halters (52) aufweist, wobei das Griffstück (60) in einem begrenzten Umfang relativ zu dem Halter (52) beweglich ist, vorzugsweise wobei das Griffstück (60) zu einer Außenseite des Gehäusetopfs (16) hin vorgespannt ist.

9. Flüssigkeitsfilter (10) nach einem der vorhergehenden Ansprüche, **dadurch gekennzeichnet, dass** die Rastvorrichtung (42) an einer Ablassöffnung (38) im Gehäusetopf (16) angeordnet ist, und dass das Filtergehäuse (12) eine Verschlussschraube (40) für die Ablassöffnung (38) aufweist.

10. Flüssigkeitsfilter (10) nach Anspruch 8 und 9, **dadurch gekennzeichnet, dass** sich das Griffstück (60) an der Verschlussschraube (40) abstützt, wenn die Verschlussschraube (40) die Ablassöffnung (38) verschließt.

11. Flüssigkeitsfilter (10) nach Anspruch 9 oder 10, **dadurch gekennzeichnet, dass** der Fortsatz (44) eine durchgehende Längsausnehmung (56) aufweist, und dass die Verschlussschraube (40) im montierten Zustand sowohl die Ablassöffnung (38) als auch die Längsausnehmung (56) verschließt.

12. Flüssigkeitsfilter (10) nach einem der Ansprüche 9 bis 11, **dadurch gekennzeichnet, dass** der Fortsatz (44) einen Ansatz (64) und ein relativ zu dem Ansatz (64) bewegliches Ausgleichselement (66) aufweist, und dass die Verschlussschraube (40) im montierten Zustand mit dem Ausgleichselement (66) gekoppelt ist, insbesondere über ein Dichtelement (58).

13. Verwendung eines Filterelements (22) mit einem Filtermedium (24), das eine Längsachse (26) ringförmig umgibt, wobei das Filterelement (22) einen Fortsatz (44) mit einer Rastnut (46) aufweist, in einem Flüssigkeitsfilter (10) nach einem der vorhergehenden Ansprüche.

14. Filterelement (22), für einen Flüssigkeitsfilter (10) nach einem der Ansprüche 1 bis 12, aufweisend ein Filtermedium (24), das eine Längsachse (26) ringförmig umgibt, und einen Fortsatz (44) mit einer Rastnut (46), wobei die Rastnut (46) einen abgerundeten, insbesondere kreissegmentförmigen, Querschnitt aufweist.

15. Filterelement (22) nach Anspruch 14, **dadurch gekennzeichnet, dass** der Fortsatz (44) und ein Stützrohr (34) und/oder eine Endscheibe (32) des Filterelements (22) miteinander einstückig sind.
